# EUROPEAN PATENT APPLICATION

(11) **EP 3 696 594 A1**
(43) Date of publication of application: **19.08.2020**
(21) Application number: 19216992.8
(22) Date of filing: 17.12.2019
(51) Int. Cl.: G02B 27/01

(54) **HEAD-UP DISPLAY DEVICE**

(30) Priority: 07.01.2019 JP 2019000722
(71) Applicant: YAZAKI CORPORATION, Minato-ku, Tokyo 108-8333 (JP)
(72) Inventor: TAKAHASHI, Nobuyuki, Susono-shi, Shizuoka 410-1194 (JP)
(74) Representative: Grünecker Patent- und Rechtsanwälte PartG mbB

(57) **Abstract**

A head-up display device (1) includes: a display device (60) including a pixel region (LP) including a plurality of pixels (10a) arranged in a matrix manner, and projecting display light (L1) corresponding to a display image (DI); a controller (40) controlling the pixels (10a), to project the display light (L1) with a display region (LA) serving as part of the pixel region (LP); and a reflection member (30) reflecting the display light (L1) projected from the display device (60) toward a display surface (103s) disposed in front of a driver's seat (DS) of a vehicle (100). The controller (40) changes each of a position of the display region along an image vertical direction in the pixel region (LP) and a shape of the display region (LA), in accordance with a height position of a projection target region (103t) onto which the display light (L1) is projected in the display surface (103s).

## Description

### BACKGROUND OF THE INVENTION

### 1. Field of the Invention

The present invention relates to a head-up display device.

### 2. Description of the Related Art

Head-up display devices that reflect display light on windshields of vehicles or the like to cause the drivers to visually recognize a virtual image are known. For example, International Publication No. WO 2017/002344 discloses a technique relating to a head-up display including a plurality of light source elements arranged in an array and emitting light, a transmission display element displaying an image, an optical member deflecting light emitted from the light source elements to be projected on the same region in an incident surface of the transmission display element, a visual point detection unit detecting a visual point position of an observer, and a controller controlling intensity of light of the light source elements in accordance with the visual point position detected with the visual point detection unit.

International Publication No. WO 2017/002344 discloses that the head-up display disclosed in International Publication No. WO 2017/002344 enables control of lighting of the light source in accordance with the position of the observer's eyes and achieves power saving.

In head-up display devices, there are cases where visibility of the display image projected onto a display surface decreases, for example, in some positions of the driver's eyes, when the display image is projected onto the display surface of a display member, such as a windshield. In head-up display devices, it is desired to suppress decrease in visibility of the display image projected onto the display surface.

### SUMMARY OF THE INVENTION

An object of the present invention is to provide a head-up display device enabling suppression of decrease in visibility of the display image projected onto the display surface.

In order to achieve the above mentioned object, a head-up display device according to one aspect of the present invention includes a display device that includes a pixel region including a plurality of pixels arranged in a matrix manner, and projects display light corresponding to a display image; a controller that is configured to control the pixels, to project the display light with a display region serving as part of the pixel region; and a reflection member that reflects the display light projected from the display device toward a display surface disposed in front of a driver's seat of a vehicle, wherein the controller is configured to change each of a position of the display region along an image vertical direction in the pixel region and a shape of the display region, in accordance with a height position of a projection target region onto which the display light is projected in the display surface.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic structure diagram illustrating a head-up display device according to an embodiment;
FIG. 2 is a sectional view illustrating the head-up display device according to the embodiment;
FIG. 3 is a plan view illustrating a pixel region and a display surface according to the embodiment;
FIG. 4 is a plan view illustrating the pixel region and the display surface according to the embodiment;
FIG. 5 is a plan view illustrating the pixel region and the display surface according to the embodiment;
FIG. 6 is a plan view illustrating the pixel region and a backlight unit according to the embodiment;
FIG. 7 is a plan view illustrating the pixel region and the backlight unit according to the embodiment;
FIG. 8 is a plan view illustrating the pixel region and the backlight unit according to the embodiment; and
FIG. 9 is a schematic structure diagram illustrating a head-up display device according to a modification of the embodiment.

### DETAILED DESCRIPTION OF THE PREFERRED EMBODIMENTS

The following is a detailed explanation of a head-up display device according to an embodiment of the present invention with reference to drawings. The present invention is not limited to the embodiment. In addition, constituent elements in the following embodiment include elements that the skilled person in the art could easily expect or substantially equal elements.

### Embodiment

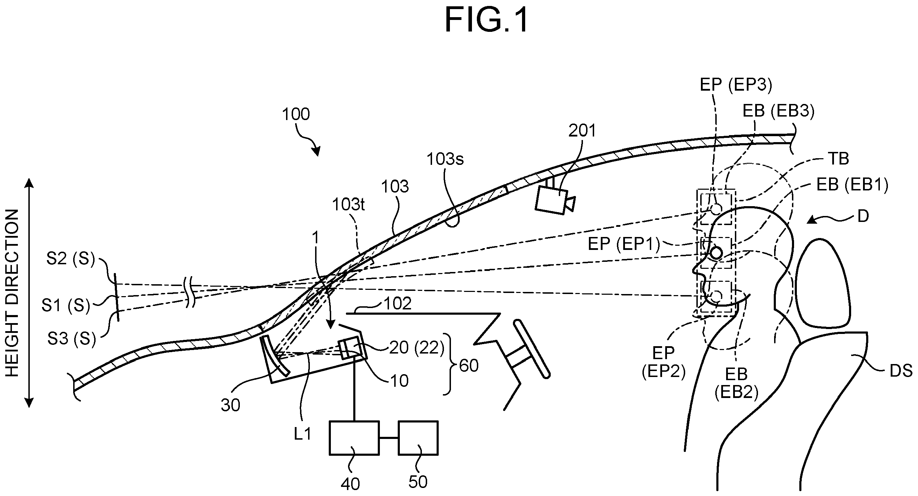

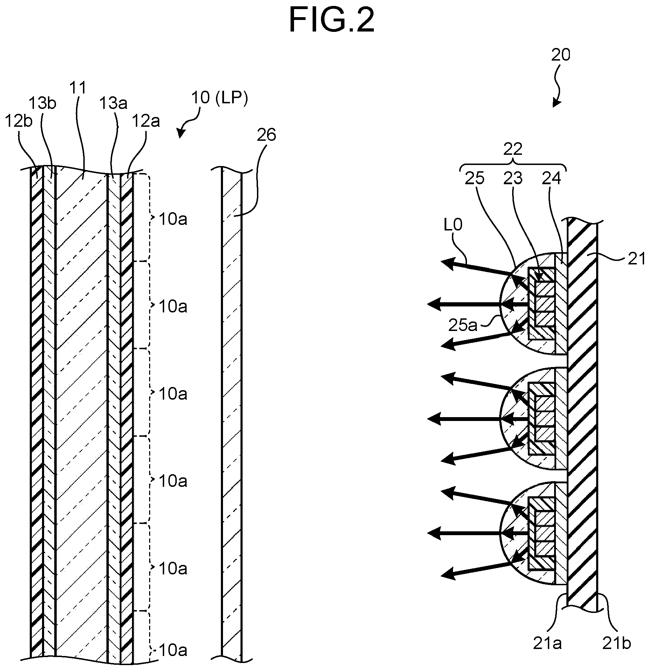

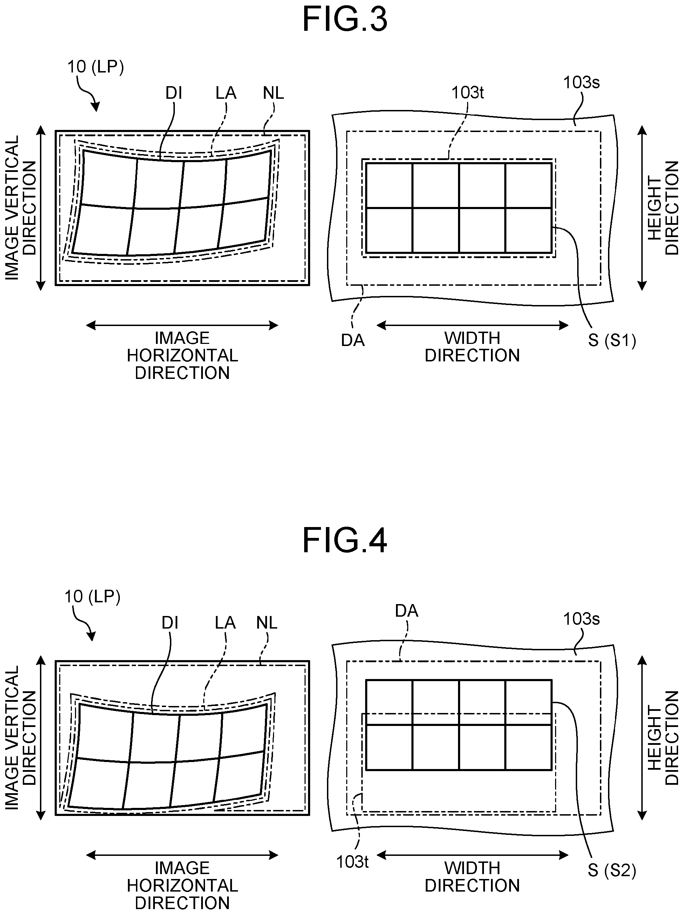

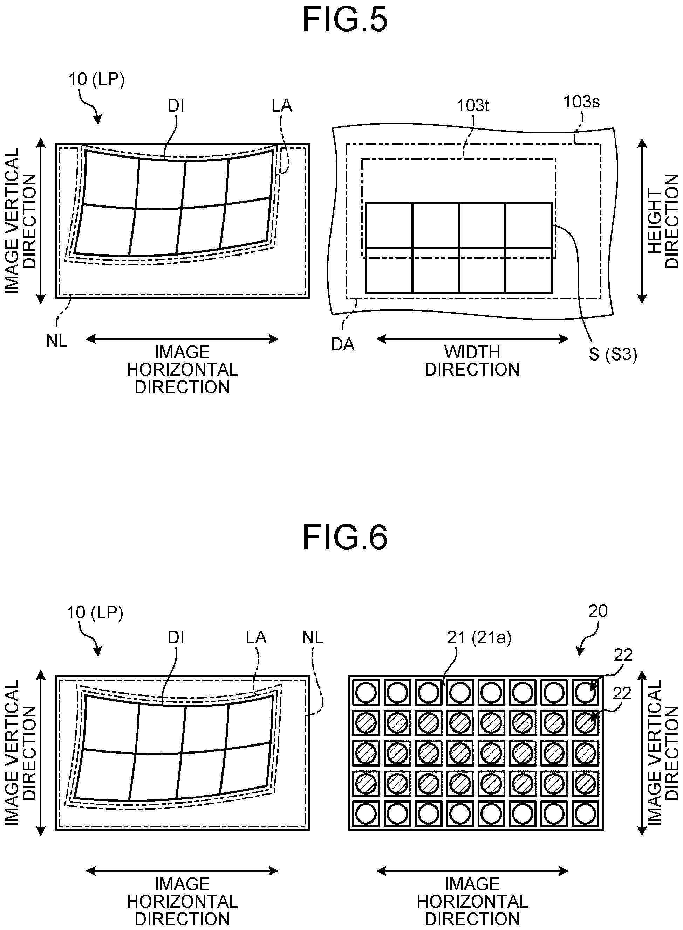

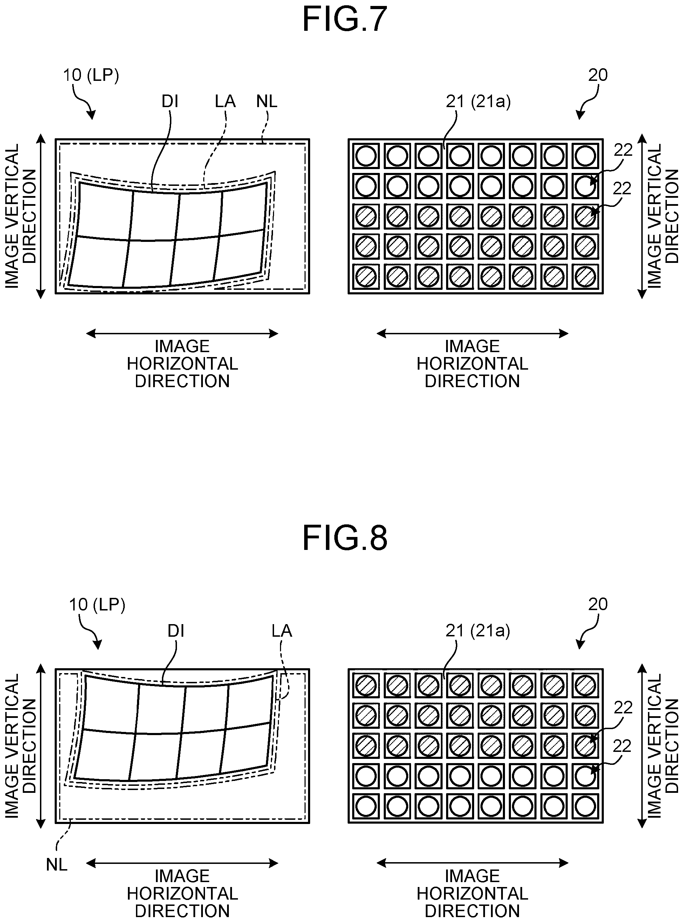

The following is an explanation of the embodiment with reference to FIG. 1 to FIG. 8. The embodiment relates to a head-up display device. FIG. 1 is a schematic structure diagram illustrating a head-up display device according to the embodiment. FIG. 2 is a sectional view illustrating the head-up display device according to the embodiment. FIG. 3 is a plan view illustrating a pixel region and a display surface according to the embodiment. FIG. 4 is a plan view illustrating the pixel region and the display surface according to the embodiment. FIG. 5 is a plan view illustrating the pixel region and the display surface according to the embodiment. FIG. 6 is a plan view illustrating the pixel region and a backlight unit according to the embodiment. FIG. 7 is a plan view illustrating the pixel region and the backlight unit according to the embodiment. FIG. 8 is a plan view illustrating the pixel region and the backlight unit according to the embodiment.

As illustrated in FIG. 1, a head-up display device 1 according to the embodiment is mounted on a vehicle 100, such as an automobile. The head-up display device 1 is disposed inside a dashboard 102 of the vehicle 100. The head-up display device 1 projects display light L1 onto a display surface 103s of a display member 103 in the vehicle 100. In the embodiment, the display member 103 is a windshield. The display member 103 is disposed in front of a driver's seat DS in the vehicle 100, and the display surface 103s is positioned in front of the driver's seat DS in the vehicle 100. The display surface 103s of the display member 103 may be provided with semi-transparent coating reflecting part of incident light and transmitting the other part of the incident light. The display light L1 projected onto the display surface 103s is reflected from the display surface 103s toward an eye point EP of the vehicle 100, and visually recognized by the driver D in the driver's seat DS as a virtual image S.

The head-up display device 1 according to the embodiment includes a liquid crystal display unit 10, a backlight unit 20, a reflection member 30, a controller 40, and a positional information acquisition unit 50. The liquid crystal display unit 10 and the backlight unit 20 form a display device 60 projecting display light L1.

The liquid crystal display unit 10 is formed of a light-transmission thin film transistor (TFT) liquid crystal display or the like. As illustrated in FIG. 2, the liquid crystal display unit 10 includes a pixel region LP including a plurality of liquid crystal pixels 10a. In the pixel region LP, the liquid crystal pixels 10a (pixels) are arranged in a matrix manner. The liquid crystal display unit 10 displays a display image DI (see FIG. 3 to FIG. 8) including numerals, characters, and/or figures and the like, in accordance with a control signal from the controller 40 mounted on the vehicle 100. The pixel region LP is a region in which the display image DI is displayed. In the pixel region LP, each of the liquid crystal pixels 10a corresponds to a pixel.

As illustrated in FIG. 2, the liquid crystal display unit 10 according to the embodiment includes a liquid crystal layer 11, a pair of polarizing plates 12a and 12b, and a pair of substrates 13a and 13b. The liquid crystal layer 11 is disposed between a pair of the polarizing plates 12a and 12b. The substrate 13a is disposed between the liquid crystal layer 11 and the polarizing plate 12a, and the substrate 13b is disposed between the liquid crystal layer 11 and the polarizing plate 12b. A pair of counter electrodes are provided on the pair of the substrates 13a and 13b. The pair of the counter electrodes are formed of a plurality of pixel electrodes and a common electrode. The pixel electrodes are provided on the substrate 13a for each of the liquid crystal pixels 10a, as each electrode corresponding to one pixel. The common electrode is provided on the substrate 13b as a common electrode for the pixel electrodes. The crystal orientation of the liquid crystal layer 11 changes according to the potential difference generated between the pair of the counter electrodes. The polarizing plates 12a and 12b are arranged to have a crossed nicol relation. The light transmittance of the liquid crystal pixels 10a changes according to change in crystal orientation of the liquid crystal layer 11. The liquid crystal display unit 10 projects display light L1 corresponding to the display image DI by transmitting light from a light source 22 of the backlight unit 20 described later.

The backlight unit 20 is an illumination device emitting light toward the liquid crystal display unit 10. As illustrated in FIG. 2, the backlight unit 20 includes a base 21, the light source 22, and a diffusion plate 26. The base 21 is a plate-shaped member including two principal surfaces 21a and 21b. The principal surface 21a faces the pixel region LP, and the light source 22 is fixed on the principal surface 21a. In the embodiment, a plurality of the light sources 22 are provided. The light sources 22 are arranged in a matrix manner on the principal surface 21a of the base 21 (see FIG. 6 to FIG. 8). The light sources 22 are arranged along an image vertical direction and an image horizontal direction of the pixel region LP.

Each of the light sources 22 according to the embodiment is a light emitting diode (LED) including a microlens 25. Each of the light sources 22 includes a light emitting element 23, a reflector 24, and the microlens 25. Each of the light sources 22 is lighted by supplying power from the power source mounted on the vehicle 100 to the light emitting element 23. The light emitting element 23 serves as a main member of the LED, and includes a p-type semiconductor layer (clad layer), an n-type semiconductor layer (clad layer), and a light emitting layer (active layer) interposed between the two semiconductor layers (clad layers). The light emitting element 23 is fixed on the base 21 via the plate-shaped reflector 24.

The reflector 24 is a member reflecting light advancing toward the base 21 side in the light from the light emitting element 23 toward the liquid crystal display unit 10 side. The reflector 24 according to the embodiment is a metal film formed of aluminum. The microlens 25 has a shape condensing light from the light emitting element 23 toward the liquid crystal display unit 10. The microlens 25 according to the embodiment has a planoconvex lens shape including a surface (emission surface 25a) being a convex curved surface on the liquid crystal display unit 10 side and a surface being a flat surface on the reflector 24 side. The microlens 25 is formed of a resin material. The light emitting element 23 is embedded in the microlens 25. The microlens 25 condenses light from the light emitting element 23, to emit light L0 as parallel light from the emission surface 25a.

In the backlight unit 20, a heat sink (not illustrated) may be fixed on the other principal surface 21b of the base 21. Heat generated in the light sources 22 accumulates in the base 21. The heat sink discharges the heat accumulating in the base 21 to the outside of the backlight unit 20.

The diffusion plate 26 is a plate-shaped member diffusing light from the light sources 22. The diffusion plate 26 is disposed between the light sources 22 and the liquid crystal display unit 10. The diffusion plate 26 is a member diffusing light L0 (for example, parallel light) condensed with the microlens 25 and emitted toward the liquid crystal display unit 10. The light condensed with the microlens 25 is diffused with the diffusion plate 26. This structure increases the range in which the display light L1 can be visually recognized in the vehicle 100. In the embodiment, the diffusion plate 26 is disposed such that the light condensed with the microlens 25 is radiated to a predetermined range in the pixel region LP. For example, to prevent too much diffusion of light from the light sources 22 with the diffusion plate 26, the distance between the diffusion plate 26 and the pixel region LP is set shorter than the distance between the diffusion plate 26 and the microlens 25.

As illustrated in FIG. 1, the reflection member 30 is a member reflecting the display light L1 toward the display surface 103s. The reflection member 30 according to the embodiment is a magnifier magnifying and reflecting the display light L1 projected from the liquid crystal display unit 10. The reflection member 30 has a shape capable of generally correcting optical aberration caused by the display surface 103s and/or another optical system provided in the head-up display device 1. For example, an aspherical (free curved surface) mirror may be used as the reflection member 30. The reflection member 30 is disposed on a side opposite to the light sources 22 side with respect to the liquid crystal display unit 10. The reflection member 30 is inclined with respect to the liquid crystal display unit 10. The inclination angle of the reflection member 30 is set to an angle to reflect the display light L1 projected from the liquid crystal display unit 10 toward the display surface 103s. In the embodiment, the inclination angle of the reflection member 30 is fixed with respect to the display device 60 (liquid crystal display unit 10). The reflection member 30 according to the present embodiment is, for example, directly fixed on a housing (case) containing the head-up display device 1. The head-up display device 1 may be provided with a movable part changing the inclination angle of the reflection member 30 with respect to the liquid crystal display unit 10. In this case, the reflection member 30 is fixed on the housing and/or the dashboard 102 via the movable part.

The controller 40 is a control device to control the display device 60. In the embodiment, the controller 40 is a control device controlling the liquid crystal display unit 10 and the backlight unit 20. The controller 40 is electrically connected with the liquid crystal display unit 10 and the backlight unit 20. The controller 40 controls the liquid crystal pixels 10a of the liquid crystal display unit 10. The controller 40 controls the voltage between the pixel electrode and the common electrode, to control light transmittance in the liquid crystal pixel 10a. With the controller 40, part of the pixel region LP is set as a display region LA transmitting the light L0 from the backlight unit 20. By the control, the display image DI is displayed in the pixel region LP (see FIG. 3 to FIG. 8). In addition, with the controller 40, the other part of the pixel region LP is set as a non-display region NL substantially preventing transmission of the light L0 from the backlight unit 20. Specifically, the controller 40 displays a display image in the display region LA serving as part of the pixel region LP, by controlling the liquid crystal pixels 10a.

The controller 40 changes the position of the display region LA along the image vertical direction in the pixel region LP, in accordance with the height position of a projection target region 103t onto which the display light L1 is projected. The term "height position" indicates a position in the height direction in the vehicle 100.

For example, as illustrated in FIG. 1, the eye position EP of the driver D in the height direction of the vehicle 100 differs according to the sitting height of the driver D in the driver's seat DS. Change in eye position EP of the driver D also changes the position of an eye box EB serving as a box-shaped space including the eye position EP of the driver D. The eye box EB is a space statistically expressing distribution of the eye positions EP of the driver D driving the vehicle 100. Specifically, the eyes of the driver D during driving are generally positioned in the eye box EB. When the height position of the display image (virtual image S) projected with the head-up display device 1 is not a position corresponding to the height position of the eye box EB of the driver D, such a situation causes the possibility that the virtual image S is not properly visually recognized by the driver D.

The range in which the eye box EB moves due to difference in sitting height of the driver D is referred to as "total eye box TB". In the embodiment, the light distribution angle of the reflection member 30 is regulated such that the display light L1 reaches the whole area of the total eye box TB. Instead of regulating the light distribution angle for the display light L1 to the total eye box TB with the reflection member 30, an optical member, such as a lens, may be provided on the optical path extending from the liquid crystal display unit 10 to the display surface 103s, to cause the display light L1 to reach the whole area of the total eye box TB.

The positional information acquisition unit 50 is a member acquiring positional information of the eyes of the driver D. As illustrated in FIG. 1, the vehicle 100 is provided with an imaging device 201. The imaging device 201 is provided at a roof portion of the vehicle 100. The imaging device 201 may be a digital camera including an imaging element, such as a charge-coupled device (CCD) image sensor and a complementary metal oxide semiconductor (CMOS) image sensor. The imaging element performs photoelectric conversion on the image that has been imaged into imaging information. The imaging information is transmitted to the positional information acquisition unit 50 by wireless communication or wired communication. The positional information acquisition unit 50 acquires positional information of the eyes of the driver D in the driver's seat DS on the basis of the imaging information received from the imaging device 201. The positional information acquisition unit 50 transmits the positional information of the eyes of the driver D to the controller 40 by wireless communication or wired communication.

The head-up display device 1 according to the embodiment changes the height position of the projection target region 103t in accordance with the eye box EB of the driver D. For example, when the eye position EP (EP1) of the driver D is a standard height position, the head-up display device 1 sets the height position of the projection target region 103t in the vicinity of the middle of a display possible region DA in the display surface 103s (see FIG. 3), in accordance with the eye box EB (EB1) of the driver D. The display possible region DA is a range of the display surface 103s onto which the display light L1 can be projected with the head-up display device 1. When the eye position EP (EP2) of the driver D is a relatively low height position, the head-up display device 1 changes the height position of the projection target region 103t in accordance with the eye box EB (EB2) of the driver D. In the embodiment, the head-up display device 1 changes the height position of the projection target region 103t to a portion lower than the middle in the display possible region DA (see FIG. 4), in accordance with the eye box EB (EB2) of the driver D. When the eye position EP (EP3) of the driver D is a relatively high height position, the head-up display device 1 changes the height position of the projection target region 103t in accordance with the eye box EB (EB3) of the driver D. In the embodiment, the head-up display device 1 changes the height position of the projection target region 103t to a portion upper than the middle in the display possible region DA (see FIG. 5), in accordance with the eye box EB (EB3) of the driver D. In this operation, the head-up display device 1 according to the embodiment changes the height position of the projection target region 103t by control of the liquid crystal pixels 10a with the controller 40.

In the display member 103 (windshield), the display surface 103s is curved to project to the forward direction of the vehicle. When the height direction of the projection target region 103t changes, the shape of the display image DI (virtual image S) projected onto the display surface 103s is corrected to a shape close to the shape of the display image DI (virtual image S) to be originally projected, but a distortion of the display image DI may remain. The head-up display device 1 according to the embodiment changes the shape of the display region LA in accordance with the height position of the projection target region 103t, by control of the liquid crystal pixels 10a with the controller 40. The shape of the display region LA in the pixel region LP is a shape to correct a distortion occurring in the virtual image S in accordance with the shape of the display surface 103s. Specifically, in the embodiment, a distortion occurring in the virtual image S is corrected also with the liquid crystal display unit 10, in addition to correction with the reflection member 30. This structure mitigates the requirements for the correction function of the reflection member 30. In addition, mitigating the requirements for the correction function of the reflection member 30 enables increase in magnification of the reflection member 30. In the embodiment, the controller 40 determines the position of the display region LA and the shape of the display region LA on the basis of the positional information of the eyes of the driver D received from the positional information acquisition unit 50.

FIG. 3 to FIG. 5 are plan views illustrating the shapes of the display region LA when the projection target region 103t is set to individual height positions that are mutually different, and virtual images S (S1 to S3) projected onto the projection target region 103t.

FIG. 3 is a plan view illustrating the shape of the display region LA and the virtual image S1 when the height position of the projection target region 103t is set in the vicinity of the middle of the display possible region DA. As illustrated in FIG. 3, the position of the display region LA along the image vertical direction in the pixel region LP is in the vicinity of the middle of the pixel region LP. The region other than the display region LA in the pixel region LP is set as a non-display region NL. By disposing the display region LA like this, the height position of the projection target region 103t is in the vicinity of the middle of the display possible region DA. The shape of the display region LA in the pixel region LP is a shape to correct a distortion occurring in the virtual image S1 projected onto the display surface 103s, in accordance with the shape of the projection target region 103t. In the embodiment, the distortion is corrected by distorting the display image DI to cancel the distortion occurring in the virtual image S1. By this correction, the virtual image S1 with a shape substantially including no distortion is projected onto the display surface 103s.

FIG. 4 is a plan view illustrating the shape of the display region LA and the virtual image S2 when the height position of the projection target region 103t is set to a portion lower than the vicinity of the middle of the display possible region DA. As illustrated in FIG. 4, the position of the display region LA along the image vertical direction in the pixel region LP is in a portion close to the lower side of the pixel region LP. In the following explanation, the term "lower" indicates a lower side on the paper in each of the drawings, and the term "upper" indicates an upper side on the paper in each of the drawings. The region other than the display region LA in the pixel region LP is set as a non-display region NL. By disposing the display region LA like this, the height position of the projection target region 103t is in a portion lower than the vicinity of the middle of the display possible region DA in the height direction. In this state, as viewed from the driver D, the display image DI is visually recognized as the virtual image S2 upper than the projection target region 103t in the height direction. The shape of the display region LA in the pixel region LP is a shape to correct a distortion occurring in the virtual image S2 projected onto the display surface 103s, in accordance with the shape of the projection target region 103t. In the embodiment, the curvature of the display surface 103s in the display possible region DA increases toward the center thereof. Accordingly, when the projection target region 103t is set to a portion lower than the vicinity of the center of the display possible region DA, the distortion amount of correction in the display image DI is set smaller than the distortion amount of correction in the display image DI projected onto the portion in the vicinity of the center of the display possible region DA. Specifically, when the height position of the virtual image S is changed, the head-up display device 1 according to the embodiment applies a corresponding correction pattern among a plurality of correction patterns to the display image DI in accordance with the shape of the projection target region 103t onto which the virtual image S is projected.

FIG. 5 is a plan view illustrating the shape of the display region LA and the virtual image S3 when the height position of the projection target region 103t is set to a portion upper than the vicinity of the middle of the display possible region DA. As illustrated in FIG. 5, the position of the display region LA along the image vertical direction in the pixel region LP is in a portion close to the upper side of the pixel region LP. The region other than the display region LA in the pixel region LP is set as a non-display region NL. By disposing the display region LA like this, the height position of the projection target region 103t is in a portion upper than the vicinity of the middle of the display possible region DA in the height direction. In this state, as viewed from the driver D, the display image DI is visually recognized as the virtual image S3 lower than the projection target region 103t in the height direction. The shape of the display region LA in the pixel region LP is a shape to correct a distortion occurring in the virtual image S3, in accordance with the shape of the projection target region 103t. In the embodiment, the curvature of the display surface 103s in the display possible region DA is approximately equal to the portion (the projection target region 103t in FIG. 4) lower than the vicinity of the center. Accordingly, when the projection target region 103t is set to a portion upper than the vicinity of the center of the display possible region DA, the distortion amount of correction in the display image DI is set smaller than the distortion amount of correction in the display image DI projected onto the portion in the vicinity of the center of the display possible region DA.

The following is an explanation of an example of control of the backlight unit 20 with the controller 40. FIG. 6 to FIG. 8 are plan views illustrating the shapes of the display region LA when the projection target region 103t is set to individual height positions that are mutually different, and the states of the light sources 22 of the backlight unit 20 as viewed from the liquid crystal display unit 10 side. FIG. 6 is a plan view corresponding to the state of FIG. 3, FIG. 7 is a plan view corresponding to the state of FIG. 4, and FIG. 8 is a plan view corresponding to the state of FIG. 5. In FIG. 6 to FIG. 8, the light sources 22 that are lighted are hatched with oblique lines.

As illustrated in FIG. 6, the position of the display region LA along the image vertical direction in the pixel region LP is a portion in the vicinity of the middle of the pixel region LP. The region other than the display region LA in the pixel region LP is set as a non-display region NL. The light sources 22 according to the embodiment are arranged in association with the liquid crystal pixels 10a of individual predetermined ranges. The light emitted from each of the light sources 22 is condensed with the microlens 25 toward the liquid crystal pixels 10a of the associated range. The controller 40 controls the backlight unit 20, to light the light sources 22 corresponding to the liquid crystal pixels 10a of the display region LA, and unlight the light sources 22 corresponding to the liquid crystal pixels 10a of the non-display region NL. In the case illustrated in FIG. 6, in the image vertical direction, the light sources 22 arranged in rows positioned in the vicinity of the middle of the principal surface 21a are lighted, and the light sources 22 arranged in rows upper and lower than the lighted light sources 22 are unlighted. By the control, the light L0 of each of the light sources 22 is generally emitted toward the display region LA. This structure suppresses emission of the light L0 of the light sources 22 toward the non-display region NL, and reduces, for example, leak light transmitted through the non-display region NL. This structure improves the contrast of the virtual image S.

In addition, in the case illustrated in FIG. 7, position of the display region along the image vertical direction in the pixel region LP is set close to the lower side of the pixel region LP. The region other than the display region LA in the pixel region LP is set as the non-display region NL. The controller 40 lights the light sources 22 arranged in rows close to the lower side of the principal surface 21a in the image vertical direction, by controlling the backlight unit 20, to emit the light L0 toward the display region LA. The light sources 22 arranged in rows upper than the lighted light sources 22 are unlighted.

In the case illustrated in FIG. 8, the position of the display region LA along the image vertical direction in the pixel region LP is set to a portion close to the upper side of the pixel region LP. The region other than the display region LA in the pixel region LP is set as the non-display region NL. The controller 40 lights the light sources 22 arranged in rows close to the upper side of the principal surface 21a in the image vertical direction by controlling the backlight unit 20, to emit light L0 toward the display region LA. The light sources 22 arranged in rows lower than the lighted light sources 22 are unlighted.

In the embodiment, the whole pixel region LP may be divided into desired sections, and the output of the light sources 22 corresponding to the section may be regulated in accordance with the brightness of the section. For example, the controller 40 may divide the light sources 22 arranged along the image horizontal direction into a section in which the light sources 22 are lighted on and a section in which the light sources 22 are unlighted. Specifically, in the height direction and the width direction (see FIG. 3 to FIG. 5) of the display possible region DA, outputs of the light sources 22 in the backlight unit 20 may be regulated in accordance with the position in which the virtual image S is displayed. In addition, when a bright section and a dark section are adjacent to each other, the output of the light sources 22 corresponding to the bright section adjacent to the dark section may be regulated to gradually change the brightness of the bright section close to the dark section, to prevent the dark portion from shining.

As described above, the head-up display device 1 according to the embodiment includes the display device 60 including the pixel region LP including a plurality of pixels (liquid crystal pixel 10a) arranged in a matrix manner and projecting display light L1 corresponding to the display image DI, the controller 40 controlling the pixels (liquid crystal pixels 10a) to project the display light L1 with the display region LA serving as part of the pixel region LP, and the reflection member 30 reflecting the display light L1 projected from the display device 60 toward the display surface 103s disposed in front of the driver's seat DS of the vehicle 100. The controller 40 changes each of the position of the display region LA along the image vertical direction in the pixel region LP and the shape of the display region LA, in accordance with the height position of the projection target region 103t onto which the display light L1 is projected in the display surface 103s.

As a structure of a comparative example, there is a structure of the head-up display device that does not change the height position of the projection target region or the shape of the display image in accordance with the height position of the eyes of the driver. In this case, due to the position of the eyes of the driver and/or the shape of the display surface, the display image projected onto the display surface may become difficult to observe or the display image may be distorted to cause decrease in visibility of the display image. In the head-up display device 1 according to the embodiment, the controller 40 changes the position of the display region LA along the image vertical direction in the pixel region LP and the shape of the display region LA, in accordance with the height position of the projection target region 103t onto which the display light L1 is projected in the display surface 103s, and suppresses decrease in visibility of the display image (virtual image S) projected onto the display surface 103s.

In addition, in the head-up display device 1 according to the embodiment, the shape of the display region LA is a shape to correct a distortion occurring in the display image (virtual image S) projected onto the display surface 103s, in accordance with the shape of the display surface 103s. This structure suppresses a distortion of the virtual image S. This structure improves the display quality of the virtual image S, and suppresses decrease in visibility of the virtual image S.

In the head-up display device 1, changing the height position of the display region LA by controlling the pixels (liquid crystal pixels 10a) may be used in combination with changing the height position of the projection target region 103t with a member (such as a drive unit) changing the inclination angle of the reflection member 30 with respect to the display device 60 (liquid crystal display unit 10 in the embodiment). In the case of adopting the structure, for example, the reflection member 30 having low magnification can also change the position of the display region LA along the image vertical direction in the pixel region LP, in accordance with the height position of the projection target region 103t.

In the embodiment, the inclination angle of the reflection member 30 with respect to the display device 60 is fixed. This structure enables removal of the member (such as the drive unit) changing the inclination angle of the reflection member 30 with respect to the display device 60. Specifically, this structure enables reduction in the number of components of the head-up display device. In addition, removal of the drive unit enables size reduction of the head-up display device. Removal of the drive unit also enables reduction in manufacturing cost of the head-up display device. In addition, because the reflection member 30 can be directly fixed on the housing or the like of the head-up display device, this structure improves shock resistance. Because the inclination angle of the reflection member 30 with respect to the display device 60 is fixed, the display device 60 can be brought close to the reflection member 30. The magnification of display with the head-up display device 1 can be increased by shortening the distance between the display device 60 and the reflection member 30 and using part of the pixel region LP as the display region LA.

In the head-up display device 1 according to the embodiment, the display device 60 includes the light source 22 and the liquid crystal display unit 10 projecting the display light L1 corresponding to the display image LA by transmitting light from the light source 22.

The head-up display device 1 according to the embodiment includes a plurality of light sources 22 arranged along the image vertical direction and the image horizontal direction of the pixel region LP, and the controller 40 lights light sources 22 corresponding to the display region LA in the light sources 22, and unlights the other light sources 22. This structure reduces the power consumption, in comparison with the case of projecting the display light L1 of the display image DI by controlling light transmittance in the liquid crystal pixels 10a in the state in which all the light sources 22 are lighted.

The head-up display device 1 according to the embodiment further includes the positional information acquisition unit 50 acquiring positional information of the eyes of the driver D in the driver's seat DS, and the controller 40 determines the position of the display region LA and the shape of the display area LA on the basis of the positional information. With this structure, the display image (virtual image S) is displayed in a proper position and a proper shape even when, for example, the driver D oneself does not regulate the position of the display region LA or the shape of the display region LA.

The explanation of the embodiment described above with reference to FIG. 3 to FIG. 8 illustrates the height position of the projection target region 103t divided into three levels, but the height position of the projection target region 103t changing in the head-up display device 1 according to the embodiment is not limited thereto. For example, the head-up display device 1 may change the height position of the projection target region 103t to levels more than the three levels. As another example, the head-up display device 1 may linearly change the height position of the projection target region 103t along the height direction.

The embodiment described above is illustrated with the example in which each of the light sources 22 is an LED including a microlens 25, but the light sources 22 are not limited thereto. For example, each of the light sources 22 may be a micro LED including a microlens 25. As another example, an LED or a micro LED including no microlens 25 may be used.

The embodiment described above is illustrated the example of changing the position of the display region LA and the shape of the display region LA on the basis of positional information of the eyes of the driver D acquired from the positional information acquisition unit 50 with the controller 40. However, the position of the display region LA and the shape of the display region LA may be regulated by operating, by the driver D, an operation panel or the like connected with the head-up display device 1. In this case, the controller 40 determines the position of the display region LA and the shape of the display region LA on the basis of data input by the driver D with the operation panel.

The embodiment described above is illustrated with the example in which the head-up display device 1 includes the light-transmission liquid crystal display unit 10 and the backlight unit 20, but the structure is not limited thereto. For example, the head-up display device 1 may include a micro LED display as the display device 60, instead of the light sources 22 and the liquid crystal display unit 10. In this case, the micro LED display includes a pixel region LP including a plurality of pixels 10a (a plurality of micro LEDs) arranged in a matrix manner, and projects display light L1 corresponding to the display image DI. The controller 40 displays the display image DI in the display region LA serving as part of the pixel region LP. The controller 40 controls the pixels 10a, to project the display light L1 with the display region LA.

### Modification of Embodiment

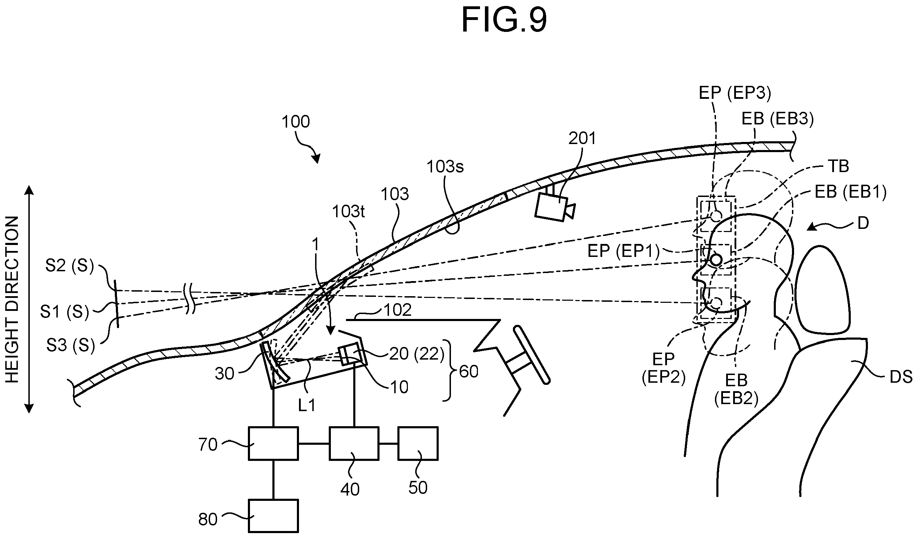

The following is an explanation of a modification of the embodiment with reference to FIG. 9. With respect to the modification of the embodiment, constituent elements having the same functions as those explained in the embodiment described above are denoted by the same reference numerals, and an overlapping explanation thereof is omitted. FIG. 9 is a schematic structure diagram illustrating a head-up display device according to the modification of the embodiment.

As illustrated in FIG. 9, a head-up display device 1 according to the modification further includes a drive unit 70 and a switch 80. The drive unit 70 is a member changing the inclination angle of the reflection member 30 with respect to the display device 60. The switch 80 is a member connected with the drive unit 70 and driving the drive unit 70. The switch 80 is operated, for example, by the driver D. The drive unit 70 changes the inclination angle of the reflection member 30 with respect to the display device 60 on the basis of the operation of the switch 80 by the driver D. The driver D can regulate the height position of the projection target region 103t to a desired position by operating the switch 80.

In the head-up display device 1 according to the embodiment, when the height position of the projection target region 103t is changed with the drive unit 70, the controller 40 changes the shape of the display region LA in accordance with the height position of the projection target region 103t (see FIG. 3 to FIG. 5). The shape of the display region LA in the pixel region LP is a shape to correct a distortion occurring in the virtual image S in accordance with the shape of the display surface 103s, like the embodiment described above. In the modification, the controller 40 is connected with the drive unit 70, and changes the shape of the display region LA in linkage with the operation (operation to change the height position of the projection target region 103t) of the drive unit 70.

The head-up display device 1 according to the modification is capable of changing the position of the display region LA along the image vertical direction in the pixel region LP in accordance with the height position of the projection target region 103t, for example, also with the reflection member 30 having magnification lower than that of the reflection member 30 according to the embodiment described above.

The height position of the projection target region 103t may be changed using changing the height position of the display region LA by controlling the pixels with the controller 40 in combination with changing the inclination angle of the reflection member 30 with respect to the display device 60 with the drive unit 70. In this case, the drive unit 70 and the controller 40 operate in linkage with each other to change the height position of the projection target region 103t, for example, on the basis of the operation of the switch 80 by the driver D.

In the case where the display device 60 includes the liquid crystal display unit 10 and the backlight unit 20, the controller 40 lights the light sources 22 corresponding to the display region LA, and unlights the other light sources 22 (see FIG. 6 to FIG. 8). The control suppresses emission of the light L0 of the light sources 22 toward the non-display region NL, and reduces, for example, leak light transmitted through the non-display region NL. This structure improves the contrast of the virtual image S.

The structures disclosed in the embodiment and the modification described above may be properly combined in execution.

In the head-up display device according to the present embodiment, the controller changes each of the position of the display region along the image vertical direction in the pixel region and the shape of the display region, in accordance with the height position of the projection target region onto which the display light is projected in the display surface. The head-up display device according to the present embodiment produces the effect of suppressing decrease in visibility of the display image projected onto the display surface.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A head-up display device (1) comprising:
a display device (60) that includes a pixel region (10a) including a plurality of pixels arranged in a matrix manner, and projects display light (L1) corresponding to a display image (LP);
a controller (40) that is configured to control the pixels, to project the display light (L1) with a display region (LA) serving as part of the pixel region (LP); and
a reflection member (30) that reflects the display light (L1) projected from the display device (60) toward a display surface (103s) disposed in front of a driver's seat (DS) of a vehicle (V), wherein
the controller (40) is configured to change each of a position of the display region (LA) along an image vertical direction in the pixel region (LP) and a shape of the display region (LA), in accordance with a height position of a projection target region (103t) onto which the display light (L1) is projected in the display surface (103s).

2. The head-up display device (1) according to claim 1, wherein
the shape of the display region (LA) is a shape to correct a distortion occurring in the display image (S) projected onto the display surface (103s), in accordance with a shape of the display surface (103s).

3. The head-up display device (1) according to claim 1 or 2, wherein
an inclination angle of the reflection member (30) with respect to the display device (10) is fixed.

4. The head-up display device (1) according to any one of claims 1 to 3, wherein
the display device (60) includes a light source (22) and a liquid crystal display unit (10) projecting display light corresponding to a display image (S) by transmitting light from the light source (22).

5. The head-up display device (1) according to claim 4, further comprising:
a plurality of the light sources (22) that are arranged along the image vertical direction and an image horizontal direction of the pixel region (LP), wherein
the controller (40) is configured to light the light sources (22) corresponding to the display region (LA) in the light sources (22), and unlight the other light sources (22) .

6. The head-up display device (1) according to any one of claims 1 to 5, further comprising:
a positional information acquisition unit (50) that is configured to acquire positional information of eyes of a driver (D) in the driver's seat (DS), wherein
the controller (40) is configured to determine the position of the display region (LA) and the shape of the display region (LA) on the basis of the positional information.
